# EUROPEAN PATENT SPECIFICATION

(11) **EP 2 534 960 B1**
(45) Date of publication and mention of the grant of the patent: **01.01.2014**
(21) Application number: 11425161.4
(22) Date of filing: 17.06.2011
(51) Int. Cl.: A23L 1/10, A23L 1/16, A23L 1/162

(54) **Improved process for the production of rice pasta and product obtained thereby.**
Verbessertes Verfahren zur Herstellung von Reisteigwaren und damit erhaltenes Produkt
Procédé amélioré pour la production de pâtes de riz et produits ainsi obtenus

(43) Date of publication of application: 19.12.2012
(73) Proprietor: Grugni, Guido, 27100 Pavia (IT); Mazzini, Flavio, 27029 Vigevano (PV) (IT); Riso Viazzo S.r.l., 13040 Crova (VC) (IT)
(72) Inventor: Grugni, Guido, 27100 Pavia (IT); Mazzini, Flavio, 27029 Vigevano (PV) (IT); Viazzo, Giuseppe, 13040 Crova (Vercelli) (IT); Viazzo, Nicola, 13040 Crova (Vercelli) (IT)
(74) Representative: Comoglio, Elena

(56) References cited:
- EP-A1- 2 110 026
- EP-A2- 0 738 473

## Description

The present invention relates to an improved process for the production of rice pasta and a rice pasta product obtained thereby.

Since rice is gluten-free, alimentary rice pasta is used in dietary regimes against intolerance to food obtained from gluten containing cereal grains.

However, because of the absence of gluten, rice pasta of the kind which is generally known exhibits sensory characteristics and resistance to cooking which are much different from those of typical pasta made from durum wheat semolina, and this greatly limits its favour on the part of the consumers.

Many attempts have been made in the art to solve this problem, as known, for example, from documents EP-A-1 214 890, EP-A-0 450 31 0, US-A-4 544 563, US-A-4 435 435, EP-A-0 738 473, and EP-B-2 110 026. All these prior art documents disclose a process according to the preamble of claim 1.

In particular, in the process disclosed in patent EP-B-2 110 026 in the name of the same Applicants of the present application, in order to improve nutritional, sensory and cooking characteristics of rice pasta, parboiled rice flour is used.

In light of the above, the Applicants recognize that the prior art discloses the use of various kinds of rice flour to obtain a dough and then the rice pasta. However, the Applicants are unaware of any prior art process which successfully makes use of unground rice comprising whole and/or broken rice grains in the production of rice pasta as disclosed in the present application

Rice flour production involves a lot of problems: grinding, sieving, explosion related to dust presence, etc.

Moreover, during grinding a lot of damaged starch is produced with undesirable effects on pasta characteristics.

The present invention is aimed at finding solution to avoid rice grinding and related problems, and to improve the rice pasta product.

This object is achieved, according to the present invention, with a process for the production of rice pasta comprising the steps of: a) soaking of rice grains in water at a temperature and for a time in order to obtain a grain moisture content between 35 and 40% by weight, b) draining-off the excess water, c) waiting to equilibrate the within-grain moisture, d) heat treating the rice grains in an extruder by contact with heated walls in order to obtain a semi-finished product having a temperature between 60 and 90 °C, and e) kneading the semi-finished product, extruding, drawing, and finally drying the same in order to obtain a dried rice pasta with a moisture content below 15% by weight, characterised in that the rice grains in said step (a) comprise whole and/or broken grains of parboiled rice and/or parboiled brown rice.

By the term "parboiled brown rice" it is intended the product which is obtained from the process of husking paddy rice to completely remove the husk, and in which the starch is completely gelatinised by subjecting paddy or husked rice to a hydrothermal process. By the term "parboiled rice" it is intended the product which is obtained from the process of husking paddy rice to completely remove the husk and further milling the husked rice to partially or completely remove the rice bran and germ, and in which the starch is completely gelatinised by subjecting the paddy or husked rice to a hydrothermal process.

The advantage of using grains of parboiled rice and/or parboiled brown rice, as taught by the present invention, is that the starch of this kind of rice is already gelatinised.

The parboiled brown rice or parboiled rice is obtained from a variety of rice having a high content of amylose, preferably not less than 24% by weight.

In relation to the varieties of rice that can be utilised in the present invention, one may also consider to use particular varieties of rice which, on account of their biological characteristics, exhibit a pigmented bran, to produce a coloured rice pasta product without addition of any additive.

In the present invention varieties of rice can also be used which, on account of their biological characteristics, emanate a particular aroma.

Optionally, to the rice from which the rice pasta according to the invention is obtained ingredients can be added which are selected from the group containing nutritional substances, vitamins, mineral salts, vegetable fibres, flavourings, colourings, binders, edible oils, and combinations thereof. In particular, rice germ, rice bran and/or other by-products of the processing of rice can be used as additional ingredients, for improving the characteristics of the rice pasta.

The invention will be now described with reference to two preferred embodiments thereof, given by way of illustration only and without limitative purpose in the following examples, so that the inventive aspects thereof may be more fully understood and appreciated.

### Example I

List of ingredients:

| | |
|---|---|
| Whole grains of parboiled rice | 10 kg |
| Water | 40 litres |

### Method of preparation:

Parboiled rice obtained from a variety of rice having an amylose content of 25% by weight and a moisture content of 12% by weight was used. The rice grains were soaked in water at a temperature of 51 °C for 20 minutes, then the excess water was drained-off and the rice grains were let to stand for 3 hours. Thereafter, the rice grains were subjected to a heat treatment in an extruder by contact with heated walls, thus obtaining a semi-finished extruded product at a temperature of 75 °C. The semi-finished product was remixed, extruded, drawn and eventually dried to obtain a rice pasta product having a moisture content of 13% by weight. The rice pasta product thus obtained was cooked in boiling water for 13 minutes and after cooking it exhibited palatable characteristics similar to those of a pasta product made from durum wheat semolina.

### Example II

### List of ingredients:

| | |
|---|---|
| Broken grains of parboiled brown rice | 10 kg |
| Water | 40 litres |

### Method of preparation:

A process similar to that of the preceding Example I was carried out with broken grains of parboiled brown rice obtained from a variety of rice having an amylose content of 25% by weight and a moisture content of 12% by weight. After cooking in boiling water the rice pasta product exhibited palatable characteristics substantially similar to those of Example I.

## Claims

1. Process for the production of rice pasta comprising the steps of: a) soaking of rice grains in water at a temperature and for a time in order to obtain a grain moisture content between 35 and 40% by weight, b) draining-off the excess water, c) waiting to equilibrate the within-grain moisture, d) heat treating the rice grains in an extruder by contact with heated walls in order to obtain a semi-finished product having a temperature between 60° and 90 °C, and e) kneading the semi-finished product, extruding, drawing, and finally drying the same in order to obtain a dried rice pasta with a moisture content below 15% by weight, **characterised in that** the rice grains in said step (a) comprise whole and/or broken grains of parboiled rice and/or parboiled brown rice.

2. Process according to claim 1, **characterised in that** the parboiled rice is obtained from a variety of rice having a content of amylose preferably not less than 24% by weight.

3. Process according to claim 1, **characterised in that** in step a) the parboiled rice and/or the parboiled brown rice grains are added with at least an additional ingredient selected from the group containing nutritional substances, vitamins, mineral salts, vegetable fibres, flavourings, colourings, binders and edible oils.

4. Process according to claim 1, **characterised in that** in step e) the semi-finished product is added with at least an additional ingredient selected from the group containing nutritional substances, vitamins, mineral salts, vegetable fibres, flavourings, colourings, binders and edible oils.

5. Process according to claim 3 or 4, **characterised in that** the additional ingredient is rice germ, rice bran and/or other by-products of the processing of rice.

6. Process according to claim 3 or 4, **characterised in that** the additional ingredient is hen egg white.

7. Process according to claim 1, **characterised in that** the parboiled rice is obtained from a variety of rice having pigmented bran.

8. Process according to claim 1, **characterised in that** the parboiled rice is obtained from a variety of rice emanating a particular aroma.

9. Rice pasta product obtainable with the process of any of the claims 1 through 8.

## Patentansprüche

1. Verfahren zur Herstellung von Reisteigwaren, umfassend die Schritte:
a) Einweichen von Reiskörnern in Wasser bei einer Temperatur und für eine Dauer, um einen Feuchtigkeitsgehalt der Körner zwischen 35 und 40 Gew.-% zu erhalten,
b) Ablaufenlassen des überschüssigen Wassers,
c) Warten, um die Feuchtigkeit innerhalb der Körner ins Gleichgewicht zu bringen,
d) Hitzebehandeln der Reiskörner in einer Extrudiervorrichtung durch Kontakt mit erhitzten Wänden, um ein halbfertiges Produkt zu erhalten, das eine Temperatur zwischen 60° und 90°C aufweist, und
e) Kneten des halbfertigen Produkts, Extrudieren, Ziehen und schließlich Trocknen desselben, um getrocknete Reisteigwaren mit einem Feuchtigkeitsgehalt unter 15 Gew.-% zu erhalten,
**dadurch gekennzeichnet, daß** die Reiskörner in Schritt (a) ganze und/oder gebrochene Körner von angekochtem Reis und/oder angekochtem Naturreis umfassen.

2. Verfahren nach Anspruch 1, **dadurch gekennzeichnet, daß** der angekochte Reis von einer Reisvarietät erhalten wird, die einen Amylosegehalt von vorzugsweise nicht weniger als 24 Gew.-% aufweist.

3. Verfahren nach Anspruch 1, **dadurch gekennzeichnet, daß** in Schritt a) die Körner von angekochtem Reis und/oder angekochtem Naturreis zusammen mit mindestens einem zusätzlichen Inhaltsstoff zugegeben werden, ausgewählt aus der Gruppe, bestehend aus Nährstoffsubstanzen, Vitaminen, Mineralsalzen, pflanzlichen Fasern, Geschmacksstoffen, Farbstoffen, Bindemitteln und eßbaren Ölen.

4. Verfahren nach Anspruch 1, **dadurch gekennzeichnet, daß** in Schritt e) das halbfertige Produkt zusammen mit mindestens einem zusätzlichen Inhaltsstoff zugegeben wird, ausgewählt aus der Gruppe, bestehend aus Nährstoffsubstanzen, Vitaminen, Mineralsalzen, pflanzlichen Fasern, Geschmacksstoffen, Farbstoffen, Bindemitteln und eßbaren Ölen.

5. Verfahren nach Anspruch 3 oder 4, **dadurch gekennzeichnet, daß** der zusätzliche Inhaltsstoff Reiskeimling, Reiskleie und/oder andere Nebenprodukte der Verarbeitung von Reis ist.

6. Verfahren nach Anspruch 3 oder 4, **dadurch gekennzeichnet, daß** der zusätzliche Inhaltsstoff Hühnereiweiß ist.

7. Verfahren nach Anspruch 1, **dadurch gekennzeichnet, daß** der angekochte Reis von einer Reisvarietät erhalten wird, die pigmentierte Kleie aufweist.

8. Verfahren nach Anspruch 1, **dadurch gekennzeichnet, daß** der angekochte Reis von einer Reisvarietät erhalten wird, die ein bestimmtes Aroma verströmt.

9. Reisteigwarenprodukt, erhältlich mit dem Verfahren nach einem der Ansprüche 1 bis 8.

## Revendications

1. Procédé de production de pâtes de riz, comportant les étapes suivantes :
a) faire tremper des grains de riz dans de l'eau, à une température et durant un laps de temps appropriés pour obtenir des grains présentant une teneur en humidité comprise entre 35 et 40 % en poids ;
b) évacuer l'eau en excès ;
c) attendre que l'humidité s'équilibre au sein des grains ;
d) faire subir aux grains de riz, dans une extrudeuse, un traitement thermique par contact avec les parois chauffées, afin d'obtenir un produit semi-fini dont la température se situe entre 60 et 90 °C ;
e) et malaxer ce produit semi-fini, l'extruder, l'étirer et enfin le faire sécher, afin d'obtenir des pâtes de riz séchées présentant une teneur en humidité de moins de 15 % en poids ;
**caractérisé en ce que** les grains de riz utilisés dans ladite étape (a) comprennent des grains entiers et/ou des brisures de riz étuvé et/ou de riz brun étuvé.

2. Procédé conforme à la revendication 1, **caractérisé en ce que** le riz étuvé a été obtenu à partir d'une variété de riz dont la teneur en amylose vaut de préférence au moins 24 % en poids.

3. Procédé conforme à la revendication 1, **caractérisé en ce que**, dans l'étape (a), on ajoute aux grains de riz étuvé et/ou de riz brun étuvé au moins un ingrédient supplémentaire choisi dans l'ensemble formé par les substances nutritionnelles, vitamines, sels minéraux, fibres végétales, aromatisants, colorants, liants et huiles comestibles.

4. Procédé conforme à la revendication 1, **caractérisé en ce que**, dans l'étape (e), on ajoute au produit semi-fini au moins un ingrédient supplémentaire choisi dans l'ensemble formé par les substances nutritionnelles, vitamines, sels minéraux, fibres végétales, aromatisants, colorants, liants et huiles comestibles.

5. Procédé conforme à la revendication 3 ou 4, **caractérisé en ce que** l'ingrédient supplémentaire est du germe de riz, du son de riz et/ou d'autres sous-produits de traitement du riz.

6. Procédé conforme à la revendication 3 ou 4, **caractérisé en ce que** l'ingrédient supplémentaire est du blanc d'oeuf de poule.

7. Procédé conforme à la revendication 1, **caractérisé en ce que** le riz étuvé a été obtenu à partir d'une variété de riz dont le son est pigmenté.

8. Procédé conforme à la revendication 1, **caractérisé en ce que** le riz étuvé a été obtenu à partir d'une variété de riz d'où émane un arôme particulier.

9. Produit de pâtes de riz, accessible par un procédé conforme à l'une des revendications 1 à 8.
